# EUROPEAN PATENT APPLICATION

(11) **EP 3 798 575 A1**
(43) Date of publication of application: **31.03.2021**
(21) Application number: 19199817.8
(22) Date of filing: 26.09.2019
(51) Int. Cl.: G01C 21/28, G05D 1/00

(54) **METHOD AND SYSTEM FOR DETERMINING LOCALIZATION OF A VEHICLE ON A ROAD**

(71) Applicant: Zenuity AB, 417 56 Göteborg (SE)
(72) Inventor: HARDÅ, Peter, 423 49 Torslanda (SE)
(74) Representative: Zacco Sweden AB

(57) **Abstract**

A method, a non-transitory computer-readable storage medium, a system and a vehicle for determining localization of a vehicle on a road are disclosed. Map data with respect to at least one road, one or more lanes of the at least one road, and one or more exits from the at least one road are received. Furthermore, localization data indicating that the vehicle is localized on the at least one road, and positioning data indicating a position of the vehicle on the at least one road are obtained. From the map data and the positioning data, an upcoming exit from the at least one road is identified. Based on the localization data, the map data and the identified exit, it is determined that for the vehicle to exit the at least one road at the identified exit, leaving of a lane by the vehicle is required. Sensor data are further received from a sensor system of the vehicle. On condition that the sensor data indicate that leaving of a lane by the vehicle can be excluded, it is determining that the vehicle is still localized on the at least one road.

## Description

### TECHNICAL FIELD

The present invention relates to a method and a system for determining localization of a vehicle on a road.

### BACKGROUND

Today, many vehicles have a variety of driver support functions in the form of advanced driver assistance systems (ADAS) features. Also, many of these features form a basis for current and future autonomous drive (AD) features. Examples of ADAS features include lane departure warning systems, lane centring, lane keeping aid, pilot assist, lane change assistance, parking sensors, pedestrian protection systems, blind spot monitors, adaptive cruise control (ACC), antilock braking systems, and so forth. These features supplement the traditional driver control of the vehicle with one or more warnings or automated actions in response to certain scenarios.

ADAS or AD systems or one or more specific features of such systems can be restricted for use only on certain road types, e.g. on a motorway or freeway, depending for example on a complexity of the traffic situation associated with the road type. Hence, before activation of such systems or one or more features, it has to be determined that the vehicle is currently travelling on a road of a required type where use of the one or more feature is allowed. Furthermore, once activated, it has to be continuously determined that the vehicle is still travelling on a road of a required type where use of the one or more feature is allowed. In presently known methods and systems, determining may be done using road type information from a map together with positioning information from a global navigation satellite system (GNSS) to identify on which road on the map a vehicle is localized. However, as GNSS positioning is limited by the relatively low accuracy (e.g. within 50 m) the availability of automated driving may be restricted at locations where this accuracy does not allow unambiguous localization of the vehicle on a specific road, e.g. a road of a required road type. For example, ambiguity may arise whether the vehicle is traveling on a specific road, e.g. of a required type such as a freeway, or if the vehicle is travelling on a nearby road, which may not be of the required type.

### SUMMARY

An object of the present disclosure is to provide a method, a non-transitory computer-readable storage medium, a system and a vehicle, which seek to mitigate, alleviate, or eliminate one or more of the above-identified deficiencies in the art and drawbacks of presently known systems and methods.

This object is achieved by a method, a non-transitory computer-readable storage medium, a system and a vehicle as defined in the appended claims. The term exemplary is in the present context to be understood as an instance, example or illustration.

According to a first aspect of the present disclosure, there is provided a method for localization of a vehicle on a road. In the method, map data with respect to at least one road, one or more lanes of the at least one road, and one or more exits from the at least one road are received. Furthermore, localization data indicating that the vehicle is localized on the at least one road are obtained, and positioning data indicating a position of the vehicle on the road are obtained. From the map data and the positioning data, an upcoming exit from the at least one is identified. Based on the localization data, the map data and the identified exit, it is determined that for the vehicle to exit the at least one road at the identified exit, leaving of a lane by the vehicle is required. Sensor data are further received from a sensor system of the vehicle. On condition that the sensor data indicate that leaving of a lane by the vehicle can be excluded, it is determining that the vehicle is still localized on the at least one road.

By means of the proposed method, localization on a road with higher confidence compared to presently known systems and methods is achieved.

The present disclosure is at least partly based on the realization that it would be advantageous to, in addition to a current position based on GNSS positioning, also use map data in respect to one or more lanes together with sensor data from sensors of a vehicle for determining of localization on a road. Such map data and sensor data may be used to rule out some alternative localization and hence avoid ambiguity. Thus, the inventor has realized that, in addition to map data in respect to at least one road, and GNSS data, also map data in respect to one or more lanes of the at least one road and one or more exits from the at least one road, and sensor data from sensors are used for determining of localization on a road. If it is determined that the vehicle is located on the at least one road and that for the vehicle to exit the at least one road at an identified exit, leaving of a lane by the vehicle is required, it will be sufficient to ensure that the vehicle has not left a lane (to exclude leaving of a lane by the vehicle) to determine that the vehicle is still localized on the road. This is advantageous for example in a situation where it can only be determined that the vehicle is currently localized on a road but it cannot be determined in which lane of the road the vehicle is travelling.

If the sensor data indicate that it can be excluded that the vehicle has left a lane, or in other words that the vehicle has not left a lane, this means that it is possible to ensure that the vehicle is still localized on the at least one road. In particular, if the sensor data indicate that it can be excluded that the vehicle has left a lane up until and after passing the identified exit, this means that it is possible to ensure that the vehicle is still localized on the at least one road after the vehicle has passed the identified exit, since it is possible to ensure that the vehicle has not exited the at least one road at the identified exit.

Identifying that it can be ensured that the vehicle is still localized on the at least one road is advantageous. For example this enables informing any features, functions, decisions etc. relying on, or benefiting from, determining of localization on the at least one road, that such localization on the at least one road can be ensured.

A vehicle in the present context may be any type of road vehicle, such as e.g. a car, a bus, a truck, etc. for which localization of the vehicle is advantageous for some reason.

According to an exemplary embodiment of the present disclosure, the method of the first aspect further comprises determining that it cannot be ensured that the vehicle is still localized on the at least one road, on condition that the sensor data indicate that leaving of a lane by the vehicle cannot be excluded.

If the sensor data indicate that it cannot be excluded that the vehicle has left a lane, or in other words that the vehicle may have left a lane, this means that it is no longer possible to ensure that the vehicle is still localized on the at least one road. In particular, if the sensor data indicate that it cannot be excluded that the vehicle has left a lane before the identified exit, this means that it is not possible to ensure that the vehicle is still localized on the at least one road since it is possible ensure that the vehicle has exited the at least one road at the identified exit.

Identifying that it cannot be ensured that the vehicle is still localized on the at least one road, is advantageous. For example this enables informing any features, functions, decisions etc. relying on, or benefiting from, determining of localization on the at least one road, that such localization on the at least one road cannot be ensured.

If localization on the at least one road cannot be ensured, this may for example lead to a disengagement/deactivation of one or more features of an ADAS or AD system, that such or other features or control of the vehicle are handed over to a driver of the vehicle, that a confirmation from the driver of the localization on the at least one road is requested etc.

In an exemplary embodiment of the present disclosure, the sensor data identify lane markings in a surrounding environment of the vehicle.

By means of the received sensor data identifying the lane markings in the surrounding environment of the vehicle, such identified lane markings and for example their position in relation to the vehicle may be used to determine whether leaving of a lane by the vehicle can or cannot be excluded.

In alternative to lane markings, other features identifying the at least one road can be identified by the sensor data. For example, this may be barriers, edges or other features delimiting the at least one road and which can be identified by the sensor data.

In a further exemplary embodiment of the present disclosure, the received map data identify a geometry of the one or more lanes, and the method of the first aspect further comprises comparing the received sensor data with the received map data. If an inconsistency between the identified lane markings in the surrounding environment of the vehicle and the geometry of the one or more lanes is identified, this is an indication that leaving of a lane by the vehicle cannot be excluded.

An inconsistency between the map data and the sensor data generally introduces an uncertainty in relation to the validity of the map data and/or the sensor data, which in itself is an indication that leaving of a lane by the vehicle cannot be excluded.

According to a further exemplary embodiment of the present disclosure, the received sensor data indicating crossing of a lane marking by the vehicle is an indication that leaving of a lane by the vehicle cannot be excluded.

As crossing of a lane marking typically means that a lane is left, such indication is an indication that leaving of a lane by the vehicle cannot be excluded.

In an exemplary embodiment of the present disclosure, the method of the first aspect further comprises identifying a side of the at least one road on which the exit is located. Furthermore, determining, based on the localization data and the map data, that for the vehicle to exit the at least one road at the identified exit, leaving of a lane by the vehicle is required comprises determining, based on the localization data and the map data, that for the vehicle to exit the at least one road at the identified exit, leaving of a lane by the vehicle is required in a direction towards the side of the at least one road on which the identified exit is located. The exemplary embodiment further comprises determining that the vehicle is still localized on the at least one road on condition that the sensor data indicate that leaving of a lane by the vehicle in a direction towards the side of the at least one road on which the identified exit is located can be excluded.

Hence, leaving of a lane by the vehicle in a direction away from the side of the at least one road on which the identified exit is located will not affect determining that the vehicle is still localized on the at least one road, since such leaving of a lane will move the vehicle to a lane further away from the identified exit.

In a further exemplary embodiment of the present disclosure, the map data further identify a type of the at least one road.

The type of the at least one road may for example be a motorway, freeway, highway, expressway etc.

In an exemplary embodiment of the present disclosure, at least one function of an automated driving system (advanced driver assistance system or autonomous drive system) of the vehicle is restricted in relation to a type of road on which the vehicle is localized, and the at least one road on which the vehicle is localized is of a type which allows the at least one function to be active. The exemplary embodiment further comprises allowing the at least one function to be active, on condition it is determined that the vehicle is still localized on the at least one road.

An exemplary embodiment of the present disclosure further comprises, deactivating the at least one function on condition it is determined that it cannot be ensured that the vehicle is still localized on the at least one road.

The at least one function may for example be a function of an ADAS or AD system. After such deactivation, a driver of the vehicle may be instructed to take over the function.

In a further exemplary embodiment of the present disclosure, the localization data are based on a comparison of historical positioning data with the map data.

According to a second aspect of the present disclosure, there is provided a non-transitory computer-readable storage medium storing one or more programs configured to be executed by one or more processors of a system, the one or more programs comprising instructions for performing the method of the first aspect. With this aspect of the disclosure, similar advantages and preferred features are present as in the previously discussed first aspect of the disclosure.

Embodiments of the non-transitory computer-readable storage medium according to the second aspect may for example include features corresponding to the features of any of the embodiments of the method according to the first aspect.

According to a third aspect of the present disclosure, there is provided a system comprising at least one processor and at least one memory. The at least one processor is configured to execute instructions stored in the memory causing the system to perform a method of the first aspect. With this aspect of the disclosure, similar advantages and preferred features are present as in the previously discussed first aspect of the disclosure.

Embodiments of the system according to the third aspect may for example include features corresponding to the features of any of the embodiments of the method according to the first aspect.

According to a fourth aspect of the present disclosure, there is provided a vehicle comprising the system of the third aspect. Embodiments of the vehicle according to the fourth aspect may for example include features corresponding to the features of any of the embodiments of the system according to the third aspect.

Further embodiments of the invention are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

### BRIEF DESCRIPTION OF THE DRAWINGS

Further objects, features and advantages of embodiments of the disclosure will appear from the following detailed description, reference being made to the accompanying drawings, in which:
Figures 1a-d show schematic perspective view illustrations of four scenarios in relation to embodiments of the present disclosure.
Figures 2a-b is a flow-chart representation of a method for determining localization of a vehicle on a road in accordance with an embodiment of the present disclosure.
Figure 3 is a schematic side view illustration of a vehicle comprising a system in accordance with an embodiment of the present disclosure.
Figure 4 is a schematic diagram of a system in accordance with an embodiment of the present disclosure.

### DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present disclosure is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

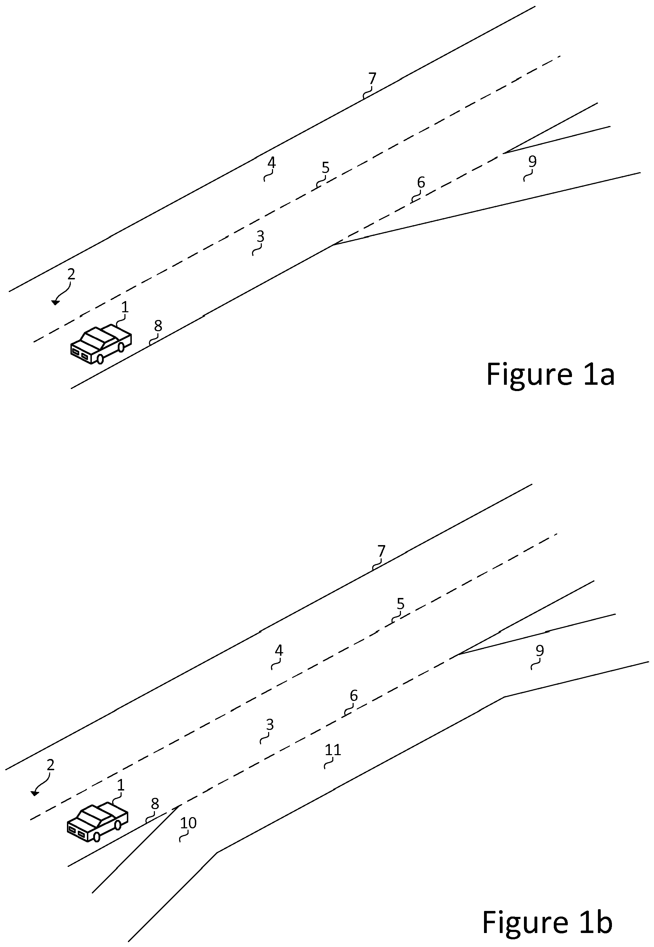

Figures 1a-d show schematic perspective view illustrations of four scenarios in relation to embodiments of the present disclosure. Specifically, the Figures 1a-d illustrate four scenarios where a vehicle 1 is travelling along a road 2 having a first lane 3 and second lane 4. Each lane is at least partly delimited by lane markings. Some lane markings 5, 6 are dashed. Dashed lane markings 5, 6 generally indicate that the vehicle is allowed to cross and that both sides of the dashed lane markings 5, 6 are areas intended for driving. Some lane markings 7, 8 are solid. Solid lane markings 7, 8 generally indicate that the vehicle is not allowed to cross and that one side of the solid lane markings 7, 8 is an area not intended for driving. From the road 2 there are one or more exits 9, e.g. in the form of. Furthermore, there may be one or more entries 10 to the road 2 as can be seen in Figure 1b.

In Figure 1a, a scenario is shown where a vehicle 1 is travelling along the road 2 in the first lane 3 towards an upcoming exit 9. The first lane 3 is delimited by the dashed lane markings 5 to the left and the solid lane markings 8 to the right up until the exit 9. At the exit 9, the solid lane marking 8 up until the exit is replaced by the dashed lane markings 6. The dashed lane marking 5 to the left indicates a boarder to the left of the first lane 3 but that the area on the left of the lane markings 5, i.e. the second lane 4, is also an area intended for driving. The solid lane markings 8 up until the exit 9 indicates a boarder to the right of the first lane 3 and that the area on the right of the solid lane markings 8 is not an area intended for driving. The dashed lane marking 6 at the exit 9 indicates a boarder to the right of the first lane 3 but that the area to the right of the lane markings 6, i.e. the exit 9, is also an area intended for driving. The second lane 4 of the road 2 is delimited to the right by the dashed lane markings 5 and to the left by the solid lane markings 7. As can be seen from the scenario on Figure 1a, in order for the vehicle 1 to exit the road 2 at the upcoming exit 9, the vehicle 1 is required to leave the first lane 3. This would be true even if the vehicle had travelled in the second lane 4. Hence, in the scenario of Figure 1a, regardless which lane 3, 4 the vehicle 1 is travelling on the road 2, the vehicle 1 is required to leave the lane it is travelling in in order to leave the road 2 at the upcoming exit 9.

In Figure 1b, a similar scenario is shown as the one in Figure 1a. The difference is that in addition to the exit 9, there is also the entry 10 from which the road 2 can be entered. Between the entry 10 and the exit 9, there is an area 11 available for both vehicles entering the road 2 from the entry 10 and vehicles exiting the rad 2 to the exit 9. The dashed lane markings 6 at the entry 10 and exit 9 indicates a boarder to the right of the first lane 3 but that the area to the right of the lane markings 6, i.e. the area 11 between the entry 10 and the exit 9, is also an area intended for driving.

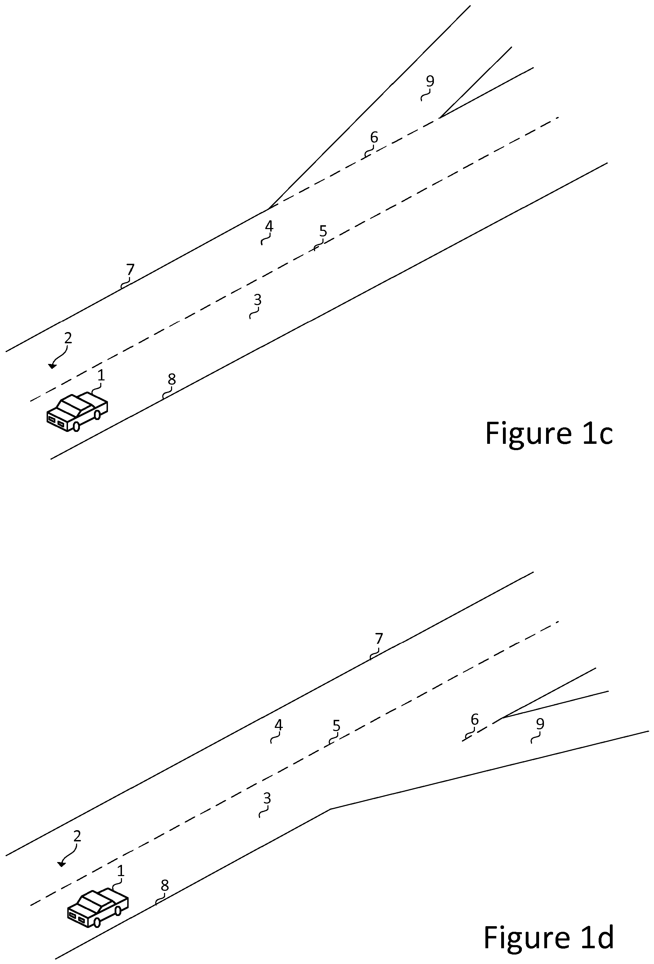

In Figure 1c, a similar scenario is shown as the one in Figure 1a. The difference is that the exit 9 is to the left of the road 2.

In Figure 1d, a similar scenario is shown as the one in Figure 1a. The difference is that the dashed lane markings 6 at the exit 9 have been worn, e.g. by vehicles exiting the road 2 at the exit 9, such that only a portion of it is visible. More specifically, a portion of the dashed lane markings 6 at the exit 9 starting at the end of the solid lane marking 8 has been worn such that it is not visible. This means that the first lane 3 lacks a lane marking on to the right at the exit 9.

Even if all four Figures 1a-d illustrate scenarios where there are two lanes, the number of lanes is not essential. Hence, scenarios with more or less lanes are also encompassed in relation to embodiments of the present disclosure. Furthermore, even if all four Figures 1a-d illustrate scenarios where it is indicated which lane the vehicle 1 is located in, generally, the method of the present disclosure will presume that such location in a specific lane is not known, e.g. because it cannot be determined.

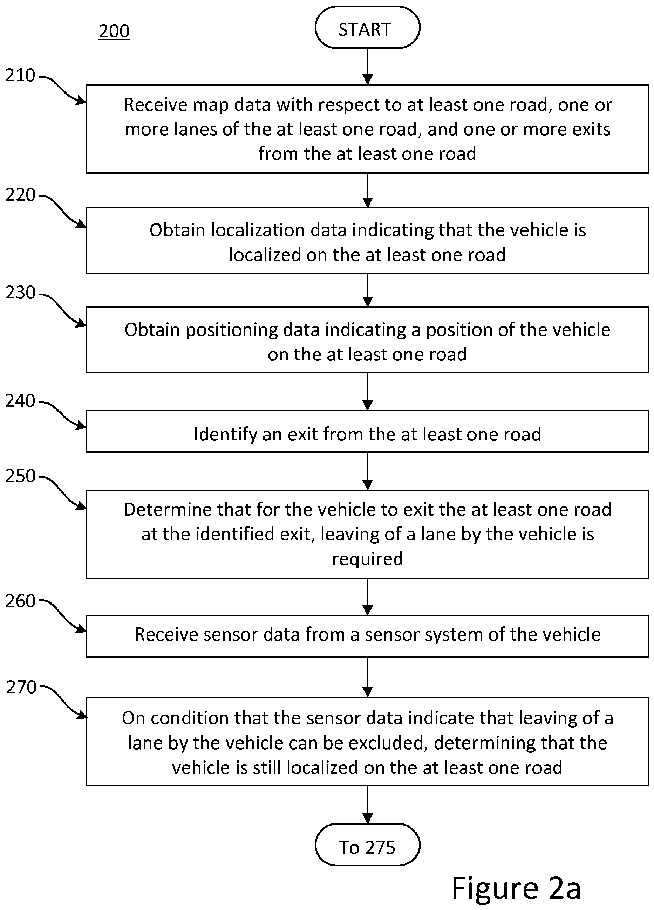

Figures 2a-b is a flow-chart representation of a method 200 for determining localization of a vehicle on a road in accordance with an embodiment of the present disclosure. In the method 200 map data with respect to at least one road, one or more lanes of the at least one road, and one or more exits from the at least one road are received 210. For the method of the present disclosure it is sufficient that the map data identify the at least one road and one or more exits from the at least one road, and an indication that all of the one or more lanes of the at least one road will pass the one or more exits, i.e. if the vehicle remains in any one of the one or more lanes it will not exit at the one or more exits.

Furthermore, localization data indicating that the vehicle is localized on the at least one road are obtained 220. The localization data need only indicate that the vehicle is localized on the at least one road but not the exact position of the vehicle, such as in which lane of the road if there are more than one lane. The localization data may be obtained in many different ways. For example, the localization data may be obtained from historical positioning data. Positions of the vehicle are obtained, e.g. based on data from a GNSS, over time and by comparing a trail of historical positions of the vehicle with map data identifying the road, it can be determined that the vehicle is localized on the road even if each historical position of the vehicle is not accurate enough to determine such localization.

Positioning data indicating a position of the vehicle on the at least one road are obtained 230. The positioning data need not be global but it is sufficient that they identify where along the at least one road the vehicle is located and they may subject to lower accuracy so that for example, they do not provide sufficient accuracy to determine which lane of the one or more lanes the vehicle is located in. The positioning data may be from, or based on data from, a GNSS.

From the map data and the positioning data, an upcoming exit from the at least one road is identified 240. By upcoming is meant that the exit is in front of the vehicle in the direction the vehicle is travelling along the road. The timing of the identification of the upcoming exit may be different depending for example on application, scenario etc. For example, an upcoming exit from the at least one road may be identified as soon as it is within a distance from the vehicle such that it is expected that the vehicle will reach it within a certain time based on a current velocity, or expected average velocity until the upcoming exit. In alternative, a next upcoming exit is always identified.

Based on the localization data, the map data and the identified exit, it is determined 250 that for the vehicle to exit the at least one road at the identified exit, leaving of a lane by the vehicle is required. For example, the map data may indicate that all of the one or more lanes of the at least one road will pass the upcoming exit, i.e. as long as the vehicle remains in one of the one or more lanes it is ensured that it will not exit at the upcoming exit. Such an indication may be provided without the need to identify a detailed geometry of the lanes or it may be provided in the form of a detailed geometry of the lanes in relation to the upcoming exit.

For example, in the scenarios of Figures 1a, 1b and 1d, the vehicle 1, would have to leave the first lane 3 in order to exit the road 2 at the upcoming exit 9. Even if the vehicle 1 had been located in the second lane 4, the vehicle 1 would have had to leave the second lane 4 (and then also the first lane 3) in order to exit the road 2 at the upcoming exit 9. Similarly, in the scenario of Figure 1c, the vehicle 1, would have to leave the first lane 3 (and then also leave the second lane 4) in order to exit the road 2 at the upcoming exit 9. Furthermore, if the vehicle 1 had been located in the second lane 4, the vehicle 1 would have had to leave the second lane 4 in order to exit the road 2 at the upcoming exit 9.

Furthermore, sensor data from a sensor system of the vehicle are received 260, and on condition that the sensor data indicate that leaving of a lane by the vehicle can be excluded, determining 270 that the vehicle is still localized on the at least one road. The sensor data may be any sensor data enabling ensuring that leaving of a lane can be excluded. For example, the sensor data may be from a sensor system identifying lane markings in a surrounding environment of the vehicle. In alternative or additionally, the sensor data may be from a sensor system identifying the dynamics of the vehicle such as whether or not and how much the vehicle is veering to the right or to the left. The sensor data indicating that leaving of a lane by the vehicle can be excluded together with the determining that for the vehicle to exit the at least one road at the identified exit, leaving of a lane by the vehicle is required, it can be determined that the vehicle is still localized on the at least one road.

In addition or in alternative to the determining 270 that the vehicle is still localized on the at least one road, on condition that the sensor data indicate that leaving of a lane by the vehicle cannot be excluded, it is determined 275 that it cannot be ensured that the vehicle is still localized on the at least one road.

The received map data may identify a geometry of the one or more lanes and the received sensor data may be compared 280 with the received map data. If an inconsistency between the received sensor data and the geometry of the one or more lanes is an indication that leaving of a lane by the vehicle cannot be excluded, it is determined that it cannot be ensured that the vehicle is still localized on the at least one road.

An inconsistency between expected geometry of the one or more lanes according to the map data and the observed sensor data indicates that the received map data do not correspond to the geometry of the one or more lanes as identified by the lane marking identified by the sensor system of the vehicle. For example, if the received sensor data relate to identified lane markings in a surrounding environment of the vehicle, and the distance between the lane markings on the right of the vehicle and on the left of the vehicle over a period suggest that the lane is becoming wider, whereas the geometry of the one or more lanes as identified by the map data does not indicate any lane becoming wider, this may constitute an inconsistency. Such an inconsistency may for example arise due to wear of the lane markings on or both sides of the vehicle, such that the lane markings are not identified by the sensor system of the vehicle. In another example, if the received sensor data relates to the dynamics of the vehicle, and the sensor data suggest that the vehicle veers rather sharp the right or to the left, whereas the geometry of the one or more lanes as identified by the map data does not indicate any sharp turn to the right or left of any lane, this may constitute an inconsistency.

For example, in the scenario of Figure 1d, the lane marking 6 between the first lane 3 and the upcoming exit 9 is worn such that only a portion of it remains. As such, it is possible for the vehicle 1 to turn right at the exit 9 without having to cross any visible line marking. In this scenario, it would not be sufficient to ensure that the vehicle does not cross any lane marking to ensure that it is still localized on the road 2. Map data including a geometry of the first lane 3 and the second lane 4 can be provided to the vehicle 1. The map data indicates that both the first lane and the second lane are of constant width (at least at the relevant portion of the road 2). Hence, if the sensor data relate to identified lane markings, processing means of the vehicle can determine that the distance between the lane markings to the right of the vehicle and the lane marking to the left of the vehicle increases along the road. Hence, there is an inconsistency between the map data and the sensor data. This indicates that leaving of a lane by the vehicle 1 cannot be excluded, and it can be determined that it cannot be ensured that the vehicle is still localized on the at least one road.

If the received sensor data relates to identified lane markings in a surrounding environment of the vehicle, and the received sensor data indicate crossing of a lane marking by the vehicle, this would typically be an indication that leaving of a lane by the vehicle 1 cannot be excluded.

For example, in the scenarios of Figures 1a and 1b, the vehicle 1, if received sensor data indicate crossing of a lane marking, leaving of a lane by the vehicle cannot be excluded. Since this may be the crossing of a lane marking of the lane markings 6 between the first lane 3 and the exit 9, it cannot be ensured that the vehicle 1 is still localized on the road 2. Similarly, in the scenario of Figure 1c, if received sensor data indicate crossing of a lane marking, leaving of a lane by the vehicle cannot be excluded. Even if the vehicle in Figure 1c is located in the first lane 3, and hence, the vehicle 1 can leave the first lane 3 without leaving the road 2 at the upcoming exit 9, this is not known as the localization of the vehicle on the road is not known in relation to which lanes the vehicle is travelling in. Hence, the detected crossing of a lane marking may be the crossing of one of the lane markings 6 between the second lane 4 and the exit 9, and thus, it cannot be ensured that the vehicle 1 is still localized on the road 2.

In some situations, leaving a lane by the vehicle need only be excluded in one direction. More specifically, if the side of the at least one road on which the upcoming exit is located is identified, it can be determined that for the vehicle to exit the at least one road at the identified exit, leaving of a lane by the vehicle is required in a direction towards the side of the at least one road on which the identified exit is located. Hence, on condition that the sensor data indicate that leaving of a lane by the vehicle in a direction towards the side of the at least one road on which the identified exit is located can be excluded, it can be determined that the vehicle is still localized on the at least one road.

For example, in the scenarios of Figures 1a and 1b, if it is identified that the upcoming exit 9 is located on the right of the road 2, leaving of a lane to the left can be allowed. For example, if received sensor data indicate crossing of a lane marking to the left, this would indicate leaving of a lane by the vehicle to a lane further away from the upcoming exit 9 on the right of the road 2. Hence, such a leaving of a lane to the left could never in itself result in the vehicle 1 leaving the road 2 at the upcoming exit 9. Hence, it can be ensured that the vehicle 1 is still localized on the road 2. In the scenario of Figure 1c, if it is identified that the upcoming exit 9 is located on the left of the road 2, leaving of a lane to the right can be allowed. In this scenario the vehicle is already positioned in the rightmost first lane 3 and even if the vehicle could leave the first lane 3 by crossing the lane markings 5 to the left and still be localized on the road 2 since the vehicle 1 would then be located in the second lane 4. However, this is not known since the lane in which the vehicle is travelling is not known in the method of the present disclosure. Hence, for received sensor data that indicate crossing of a lane marking to the left, it cannot be ensured that the vehicle 1 is still localized on the road 2.

The map data may further identify a type of the at least one road. Such an identification of the type of the road is relevant for example when one or more functions of an advanced driver assistance system or an autonomous drive system of the vehicle is restricted in relation to a type of road on which the vehicle is localized. For scenarios wherein the at least one road on which the vehicle is localized is of a type that allows the at least one function to be active, the at least one function can be allowed 285 to be active as long it is determined that the vehicle is still be localized on the at least one road. If it is determined that it cannot be ensured that the vehicle is still localized on the at least one road, the at least one function is deactivated 290.

For example, one or more functions of an advanced driver assistance system or an autonomous drive system of the vehicle may only be allowed on a type of road, e.g. a motorway, freeway highway, expressway etc., since the traffic situations on the allowed type is more limited than on other types of roads or those one or more functions have been specifically developed for the traffic situations on the allowed type. Hence, when it cannot be ensured that the vehicle has exited the road of the allowed type, the function has to be deactivated.

Alternative uses of the determining of localization on the at least one road can be in relation to a navigation system. For example, if a navigation system has calculated a route to a destination where the vehicle should exit the at least one road at an identified upcoming exit and it is later determined that the vehicle is still localized on the at least one road after the identified exit, such information can be used to quickly calculate a new route to the destination based on the fact that the vehicle did not exit the at least one road at the identified exit.

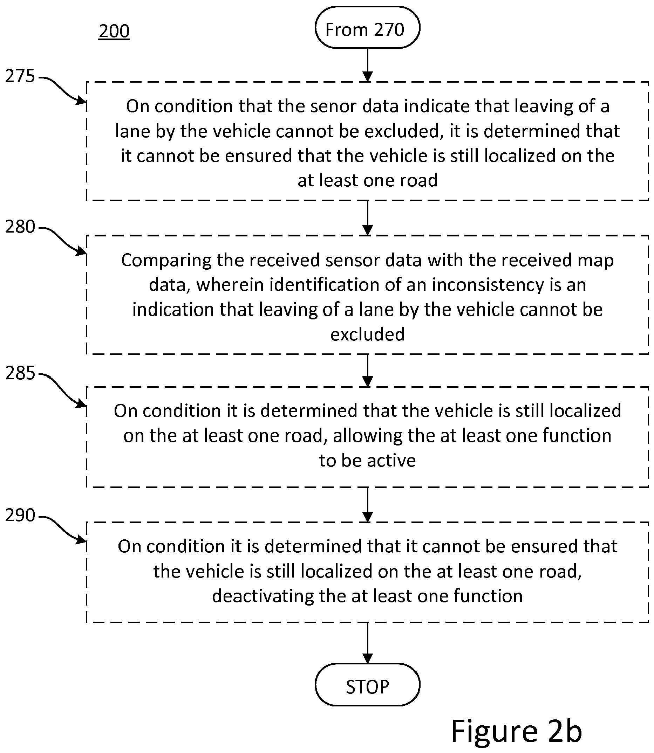

Figures 2a and 2b comprise some steps that are illustrated in boxes with a solid border and some steps that are illustrated in boxes with a dashed border. The steps that are comprised in boxes with a solid border are operations that are comprised in the broadest example embodiment. The steps that are comprised in boxes with a dashed border are example embodiments that may be comprised in, or a part of, or are further operations that may be taken in addition to the operations of the border example embodiments. The steps do not all need to be performed in order and not all of the operations need to be performed. Furthermore, at least some of the steps may be performed in parallel.

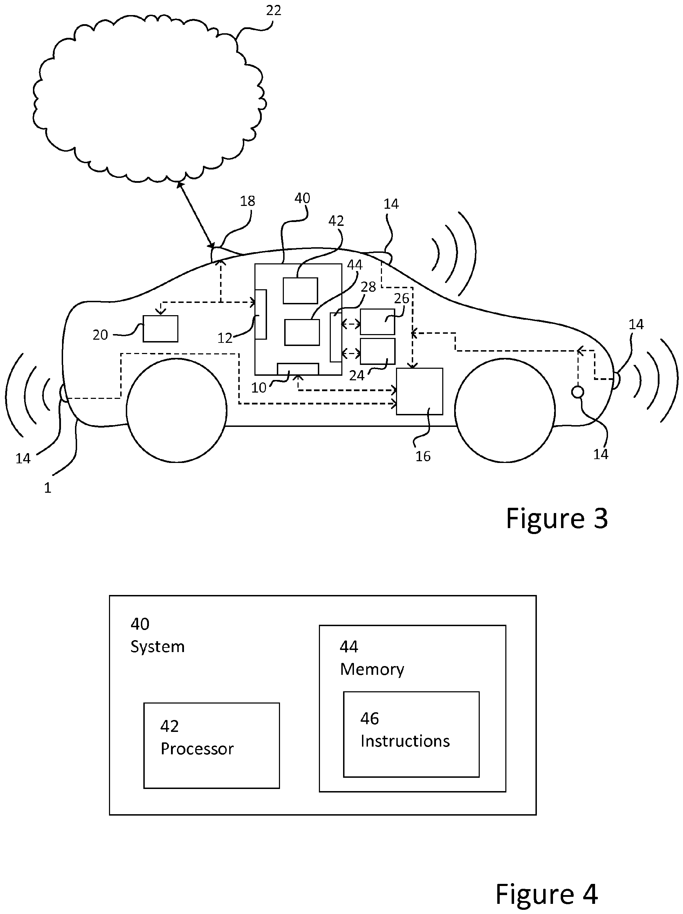

Figure 3 is a schematic side view illustration of a vehicle 1 comprising a system in accordance with an embodiment of the present disclosure.

The vehicle 1 has a sensor system comprising a plurality of sensors 14 (e.g. cameras, LIDARs, RADARs, ultrasound transducers, etc.). The sensors 14 are configured to acquire information representative of a surrounding environment of the vehicle 1. In more detail, the sensors 14 is suitable for tracking one or more road references such as lane markings and the like. Based on the tracking, lane markings and crossing by the vehicle 1 of the lane markings can be identified. Furthermore, inconsistencies between expected geometry of the one or more lanes according to received map data and observed sensor data can be identified. Such inconsistencies indicate that the received map data do not correspond to the geometry of the one or more lanes as identified by the lane marking identified by the sensors 14 of the vehicle 1. For example, if the distance from the lane markings on the right of the vehicle 1 to the lane markings on the left of the vehicle 1 over a period suggest that the lane is becoming wider, whereas the geometry of the one or more lanes as identified by the map data does not indicate any lane becoming wider, this may constitute an inconsistency. Such an inconsistency may for example arise due to wear of the lane markings on or both sides of the vehicle 1, such that the lane markings are not identified by the sensor system of the vehicle 1.

Further sensors (not shown) may be included in the sensor system of the vehicle 1, such as sensors for sensing the dynamics of the vehicle.

Further, a processor 40 of the system is configured to receive sensor data comprising information about the surrounding environment of the vehicle 1 and/or dynamics of the vehicle 1. It should be appreciated that the sensor interface 10 may also provide the possibility to acquire sensor data directly (not shown) or via dedicated sensor control circuitry 16 in the vehicle 1. The communication/antenna interface 12 may further provide the possibility to send output to a remote location by means of an antenna 18. Moreover, some sensors 14 in the vehicle 1 may communicate with the system 40 using a local network setup, such as CAN bus, I2C, Ethernet, optical fibres, and so on. The communication/antenna interface 12 may be arranged to communicate with other control functions of the vehicle 1 and may thus be seen as control interface also. However, a separate control interface (not shown) may be provided. Local communication within the vehicle 1 may also be of a wireless type with protocols such as WiFi, LoRa, Zigbee, Bluetooth, or similar mid/short range technologies.

The vehicle 1 also comprises a localization system 20 configured to determine a map position of the vehicle 1 and an orientation of the vehicle 1.

Further, the vehicle 1 may be connected to an external network 22. The connection from the vehicle 1 to the external network 22 may for example be via for instance a wireless link (e.g. for performing a part or all of the computations by means of remote resources) via the antenna 18.

The same or some other wireless link may be used to communicate with other vehicles in the vicinity of the vehicle 1 or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The system 40 may also be connected to a control system 24 of the vehicle 1 and/or a user interface 26 via an interface 28. Via the interface 28, the system 40 may send signals to the control system 24 in order to activate or deactivate functions/features of the control system 24. Additionally or alternatively, the system 40 may send signals via the interface 24 to the user interface 28 to provide information or instructions to a driver of the vehicle 1.

Figure 4 is a schematic diagram of system 40 in accordance with an embodiment of the present disclosure. The central control system at least one processor 42 and at least one memory 44. The processor is configured to execute instructions 46 stored in the memory 44 causing the central control system 40 to perform method for determining driving assisting data in relation to a vehicle based on sensor data in relation to other vehicles according to the disclosure and in particular according to the embodiments disclosed in relation to Figures 2a and 2b.

The system 40 may for example be manifested as a general-purpose processor, an application specific processor, a circuit containing processing components, a group of distributed processing components, a group of distributed computers configured for processing, a field programmable gate array (FPGA), etc. The system 40 may further include a microprocessor, microcontroller, programmable digital signal processor or another programmable device. The central control system 40 may also, or instead, include an application-specific integrated circuit (ASIC), a programmable gate array or programmable array logic, a programmable logic device, or a digital signal processor. Where the system 40 includes a programmable device such as the microprocessor, microcontroller or programmable digital signal processor mentioned above, the processor may further include computer executable code that controls operation of the programmable device.

The processor(s) 42 (associated with the system 40) may be or include any number of hardware components for conducting data or signal processing or for executing computer code (instructions 46) stored in memory 44. The memory 44 may be one or more devices for storing data and/or computer code for completing or facilitating the various methods described in the present description. The memory 44 may include volatile memory or non-volatile memory. The memory 44 may include database components, object code components, script components, or any other type of information structure for supporting the various activities of the present description. According to an exemplary embodiment, any distributed or local memory device may be utilized with the systems and methods of this description. According to an exemplary embodiment the memory 44 is communicably connected to the processor 42 (e.g., via a circuit or any other wired, wireless, or network connection) and includes computer code for executing one or more processes described herein.

Comprised in the system 40 may be a non-transitory computer-readable storage medium 44 storing one or more programs configured to be executed by one or more processors 42 of the system 40, the one or more programs comprising instructions 46 for causing the system 40 to perform the method according to the disclosure and in particular according to the embodiments disclosed in relation to Figures 2a and 2b.

Generally speaking, a computer-accessible medium may include any tangible or non-transitory storage media or memory media such as electronic, magnetic, or optical media - e.g., disk or CD/DVD-ROM coupled to computer system via bus. The term "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The present disclosure has been presented above with reference to specific embodiments. However, other embodiments than the above described are possible and within the scope of the disclosure. Different method steps than those described above, performing the method by hardware or software, may be provided within the scope of the disclosure. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

Exemplary methods, computer-readable storage media, systems, and vehicles are set out in the following items:
1. A method for determining localization of a vehicle on a road, the method comprising:
   receiving map data with respect to at least one road, one or more lanes of the at least one road, and one or more exits from the at least one road;
   obtaining localization data indicating that the vehicle is localized on the at least one road;
   obtaining positioning data indicating a position of the vehicle on the at least one road ;
   identifying, from the map data and the positioning data, an upcoming exit from the at least one road;
   determining, based on the localization data, the map data and the identified exit, that for the vehicle to exit the at least one road at the identified exit, leaving of a lane by the vehicle is required;
   receiving sensor data from a sensor system of the vehicle ; and
   on condition that the sensor data indicate that leaving of a lane by the vehicle can be excluded, determining that the vehicle is still localized on the at least one road .
2. The method of item 1, further comprising:
   on condition that the sensor data indicate that leaving of a lane by the vehicle cannot be excluded, determining that it cannot be ensured that the vehicle is still localized on the at least one road.
3. The method of any one of items 1 and 2, wherein the sensor data identify lane markings in a surrounding environment of the vehicle.
4. The method of any one of items 1-3, wherein the received map data identify a geometry of the one or more lanes, the method further comprising:
   comparing the received sensor data with the received map data, wherein identification of an inconsistency between the received sensor data and the geometry of the one or more lanes is an indication that leaving of a lane by the vehicle cannot be excluded.
5. The method of item 3, wherein the received sensor data indicating crossing of a lane marking by the vehicle is an indication that leaving of a lane by the vehicle cannot be excluded.
6. The method of item 1, further comprising:
   identifying a side of the at least one road on which the exit is located,
   wherein determining, based on the localization data and the map data, that for the vehicle to exit the at least one road at the identified exit, leaving of a lane by the vehicle is required comprises:
      determining, based on the localization data and the map data, that for the vehicle to exit the at least one road at the identified exit, leaving of a lane by the vehicle is required in a direction towards the side of the at least one road on which the identified exit is located,
      the method further comprising:
         on condition that the sensor data indicate that leaving of a lane by the vehicle in a direction towards the side of the at least one road on which the identified exit is located can be excluded, determining that the vehicle is still localized on the at least one road.
7. The method of any one of items 1-6, wherein the map data further identify a type of the at least one road.
8. The method of item 7, wherein at least one function of an automated driving system of the vehicle is restricted in relation to a type of road on which the vehicle is localized, and wherein the at least one road on which the vehicle is localized is of a type which allows the at least one function to be active, further comprising:
   on condition it is determined that the vehicle is still localized on the at least one road, allowing the at least one function to be active.
9. The method of items 8 and 2, further comprising:
   on condition it is determined that it cannot be ensured that the vehicle is still localized on the at least one road, deactivating the at least one function .
10. The method of any one of items 1-9, wherein the localization data are based on a comparison of historical positioning data with the map data.
11. A non-transitory computer-readable storage medium storing one or more programs configured to be executed by at least one processor of a system, the one or more programs comprising instructions for causing the system to perform the method according to any one of items 1-10.
12. A system for determining localization of a vehicle on a road, the system comprising:
   at least one processor;
   at least one memory;
   wherein the at least one processor is configured to execute instructions stored in the memory causing the system to perform a method comprising:
      receiving map data with respect to at least one road, one or more lanes of the at least one road, and one or more exits from the at least one road;
      obtaining localization data indicating that the vehicle is localized on the at least one road;
      obtaining positioning data indicating a position of the vehicle on the at least one road;
      identifying, from the map data and the positioning data, an upcoming exit from the at least one road;
      determining, based on the localization data, the map data and the identified exit, that for the vehicle to exit the at least one road at the identified exit, leaving of a lane by the vehicle is required;
      receiving sensor data from a sensor system of the vehicle; and
      on condition that the sensor data indicate that leaving of a lane by the vehicle can be excluded, determining that the vehicle is still localized on the at least one road.
13. The system of item 12, wherein the at least one processor is further configured to execute further instructions stored in the memory causing the system to perform the method further comprising:
   on condition that the sensor data indicate that leaving of a lane by the vehicle cannot be excluded, determining that it cannot be ensured that the vehicle is still localized on the at least one road.
14. The system of any one of items 12 and 13, wherein the sensor data identify lane markings in a surrounding environment of the vehicle.
15. The system of item 14, wherein the received map data identify a geometry of the one or more lanes, and wherein the at least one processor is further configured to execute further instructions stored in the memory causing the system to perform the method further comprising:
   comparing the received sensor data with the received map data, wherein identification of an inconsistency between the identified lane markings in the surrounding environment of the vehicle and the geometry of the one or more lanes is an indication that leaving of a lane by the vehicle cannot be excluded.
16. The system of any one of items 14 and 15, wherein the received sensor data indicating crossing of a lane marking by the vehicle is an indication that leaving of a lane by the vehicle cannot be excluded.
17. The system of item 12, wherein the at least one processor is further configured to execute further instructions stored in the memory causing the system to perform the method further comprising:
   identifying a side of the at least one road on which the exit is located,
   wherein determining, based on the localization data and the map data, that for the vehicle to exit the at least one road at the identified exit, leaving of a lane by the vehicle is required comprises:
      determining, based on the localization data and the map data, that for the vehicle to exit the at least one road at the identified exit, leaving of a lane by the vehicle is required in a direction towards the side of the at least one road on which the identified exit is located,
      the at least one processor is further configured to execute further instructions stored in the memory causing the system to perform the method further comprising:
         on condition that the sensor data indicate that leaving of a lane by the vehicle in a direction towards the side of the at least one road on which the identified exit is located can be excluded, determining that the vehicle is still localized on the at least one road.
18. The system of any one of items 12-17, wherein the map data further identify a type of the at least one road.
19. The system of item 18, wherein at least one function of an automated driving system of the vehicle is restricted in relation to a type of road on which the vehicle is localized, and wherein the at least one road on which the vehicle is localized is of a type which allows the at least one function to be active, wherein the at least one processor is further configured to execute further instructions stored in the memory causing the system to perform the method further comprising:
   on condition it is determined that the vehicle is still localized on the at least one road, allowing the at least one function to be active.
20. The system of items 19 and 13, wherein the at least one processor is further configured to execute further instructions stored in the memory causing the system to perform the method further comprising:
   on condition it is determined that it cannot be ensured that the vehicle is still localized on the at least one road, deactivating the at least one function.
21. The system of any one of items 12-20, wherein the localization data are based on a comparison of historical positioning data with the map data.
22. A vehicle comprising the system of any one of items 12-21.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising information about a movement and information about a current road scenario may be interchanged based on a specific realization. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent embodiments should be apparent for the person skilled in the art.

## Claims

1. A method for determining localization of a vehicle on a road, the method comprising:
receiving map data with respect to at least one road, one or more lanes of the at least one road, and one or more exits from the at least one road;
obtaining localization data indicating that the vehicle is localized on the at least one road;
obtaining positioning data indicating a position of the vehicle on the at least one road;
identifying, from the map data and the positioning data, an upcoming exit from the at least one road;
determining, based on the localization data, the map data and the identified exit, that for the vehicle to exit the at least one road at the identified exit, leaving of a lane by the vehicle is required;
receiving sensor data from a sensor system of the vehicle; and
on condition that the sensor data indicate that leaving of a lane by the vehicle can be excluded, determining that the vehicle is still localized on the at least one road.

2. The method of claim 1, further comprising:
on condition that the sensor data indicate that leaving of a lane by the vehicle cannot be excluded, determining that it cannot be ensured that the vehicle is still localized on the at least one road.

3. The method of any one of claims 1 and 2, wherein the sensor data identify lane markings in a surrounding environment of the vehicle.

4. The method of any one of claims 1-3, wherein the received map data identify a geometry of the one or more lanes, the method further comprising:
comparing the received sensor data with the received map data, wherein identification of an inconsistency between the received sensor data and the geometry of the one or more lanes is an indication that leaving of a lane by the vehicle cannot be excluded.

5. The method of claim 3, wherein the received sensor data indicating crossing of a lane marking by the vehicle is an indication that leaving of a lane by the vehicle cannot be excluded.

6. The method of claim 1, further comprising:
identifying a side of the at least one road on which the exit is located,
wherein determining, based on the localization data and the map data, that for the vehicle to exit the at least one road at the identified exit, leaving of a lane by the vehicle is required comprises:
determining, based on the localization data and the map data, that for the vehicle to exit the at least one road at the identified exit, leaving of a lane by the vehicle is required in a direction towards the side of the at least one road on which the identified exit is located,
the method further comprising:
on condition that the sensor data indicate that leaving of a lane by the vehicle in a direction towards the side of the at least one road on which the identified exit is located can be excluded, determining that the vehicle is still localized on the at least one road.

7. The method of any one of claims 1-6, wherein the map data further identify a type of the at least one road.

8. The method of claim 7, wherein at least one function of an automated driving system of the vehicle is restricted in relation to a type of road on which the vehicle is localized, and wherein the at least one road on which the vehicle is localized is of a type which allows the at least one function to be active, further comprising:
on condition it is determined that the vehicle is still localized on the at least one road, allowing the at least one function to be active.

9. The method of claim 8 and 2, further comprising:
on condition it is determined that it cannot be ensured that the vehicle is still localized on the at least one road, deactivating the at least one function.

10. The method of any one of claims 1-9, wherein the localization data are based on a comparison of historical positioning data with the map data.

11. A non-transitory computer-readable storage medium storing one or more programs configured to be executed by at least one processor of a system, the one or more programs comprising instructions for causing the system to perform the method according to any one of claims 1-10.

12. A system for determining localization of a vehicle on a road, the system comprising:
at least one processor;
at least one memory;
wherein the at least one processor is configured to execute instructions stored in the memory causing the system to perform a method comprising:
receiving map data with respect to at least one road, one or more lanes of the at least one road, and one or more exits from the at least one road;
obtaining localization data indicating that the vehicle is localized on the at least one road;
obtaining positioning data indicating a position of the vehicle on the at least one road;
identifying, from the map data and the positioning data, an upcoming exit from the at least one road;
determining, based on the localization data, the map data and the identified exit, that for the vehicle to exit the at least one road at the identified exit, leaving of a lane by the vehicle is required;
receiving sensor data from a sensor system of the vehicle; and
on condition that the sensor data indicate that leaving of a lane by the vehicle can be excluded, determining that the vehicle is still localized on the at least one road.

13. The system of claim 12, wherein the at least one processor is further configured to execute further instructions stored in the memory causing the system to perform the method further comprising:
on condition that the sensor data indicate that leaving of a lane by the vehicle cannot be excluded, determining that it cannot be ensured that the vehicle is still localized on the at least one road.

14. The system of any one of claims 12 and 13, wherein the sensor data identify lane markings in a surrounding environment of the vehicle.

15. A vehicle comprising the system of any one of claims 12-14.
